Europäisches Patentamt

European Patent Office

Office européen des brevets

(11) Publication number: **0 244 073 B1**

# EUROPEAN PATENT SPECIFICATION

(45) Date of publication of patent specification: **17.06.92**  (51) Int. Cl.⁵: **B60J  7/10**

(21) Application number: **87302254.5**

(22) Date of filing: **17.03.87**

(54) **An automobile roof structure.**

(30) Priority: **30.04.86 JP 100238/86**
        **30.04.86 JP 100239/86**

(43) Date of publication of application:
      **04.11.87 Bulletin  87/45**

(45) Publication of the grant of the patent:
      **17.06.92 Bulletin  92/25**

(84) Designated Contracting States:
      **DE FR GB**

(56) References cited:
      **DE-A- 1 455 743**
      **FR-A- 1 236 141**
      **US-A- 3 494 659**
      **US-A- 3 610 681**

(73) Proprietor: **TOYOTA JIDOSHA KABUSHIKI KAISHA**
      **1, Toyota-cho Toyota-shi**
      **Aichi-ken 471(JP)**

(72) Inventor: **Okamoto, Kazuo**
      **2-2-29, Miyagami-cho**
      **Toyota-shi Aichi-ken(JP)**
      Inventor: **Ohhashi, Hiroshi**
      **15, 93 Banchi Aza 6 Chome Inaguma-cho**
      **Okazaki-shi Aichi-ken(JP)**
      Inventor: **Tatsumoto, Tokuichi**
      **304, Dai 1 Yamanoteen 7-55, Yamanote**
      **Toyota-shi Aichi-ken(JP)**

(74) Representative: **Ben-Nathan, Laurence Albert et al**
      **Urquhart-Dykes & Lord 91 Wimpole Street**
      **London W1M 8AH(GB)**

# Description

The present invention relates to an automobile roof structure which includes a detachable roof section and a windshield frame. The detachable roof section is secured selectively to the windshield frame by a simple fastening means. More particularly, the present invention relates to improvements in fastening means for fastening the detachable roof section to the windshield frame. The fastening means of the present invention obviates the installation problems encountered with known devices.

U.S. Patent 3,610,681 discloses an automobile roof structure which includes a detachable roof section, fastening means for fastening the detachable roof section to a windshield frame and to a roll bar.

Said fastening means includes a tension-locking device, and clamping locks, respectively.

However, this conventional automobile roof structure is complex and includes many components.

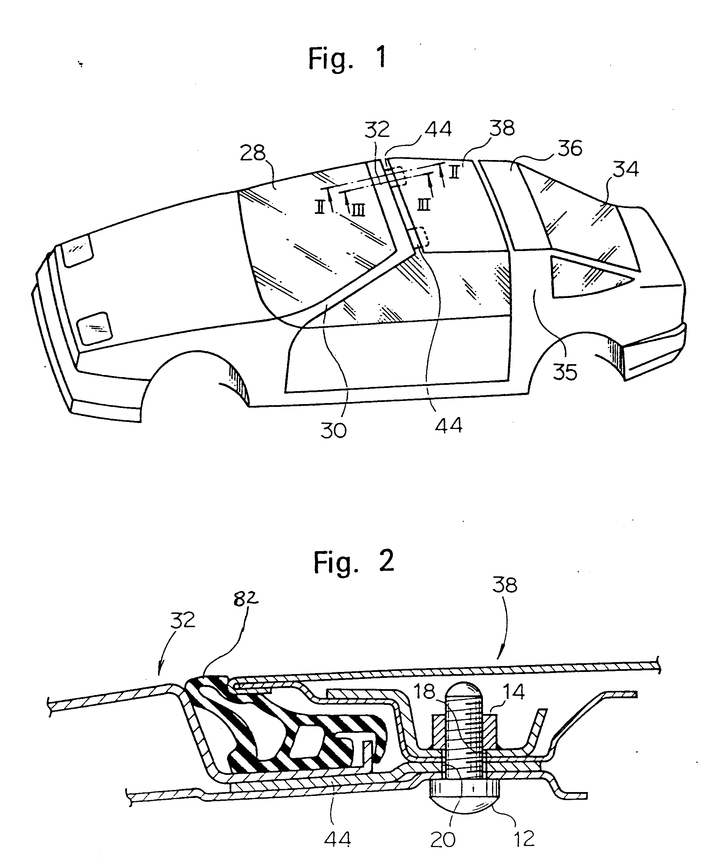

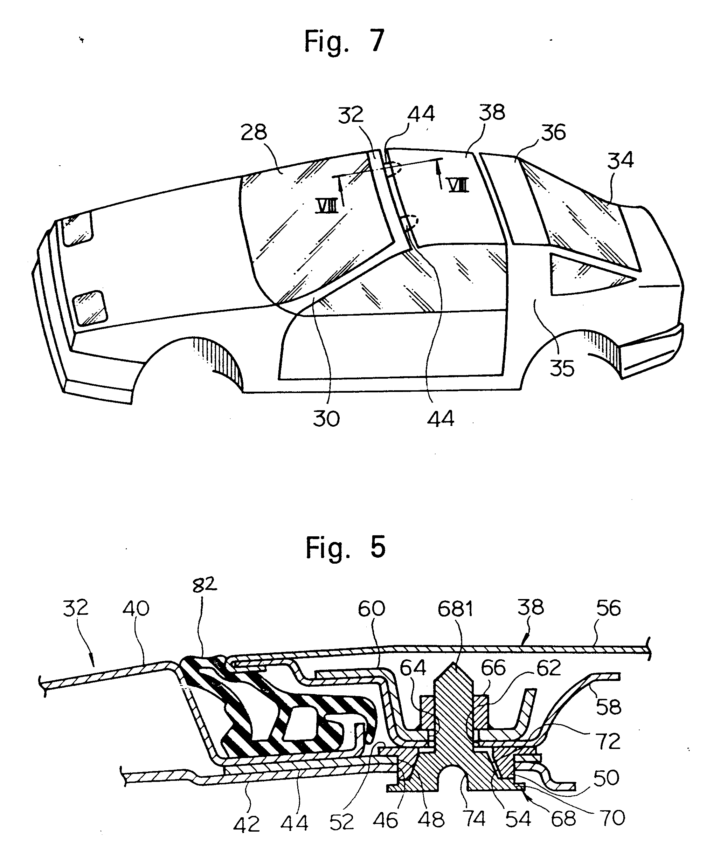

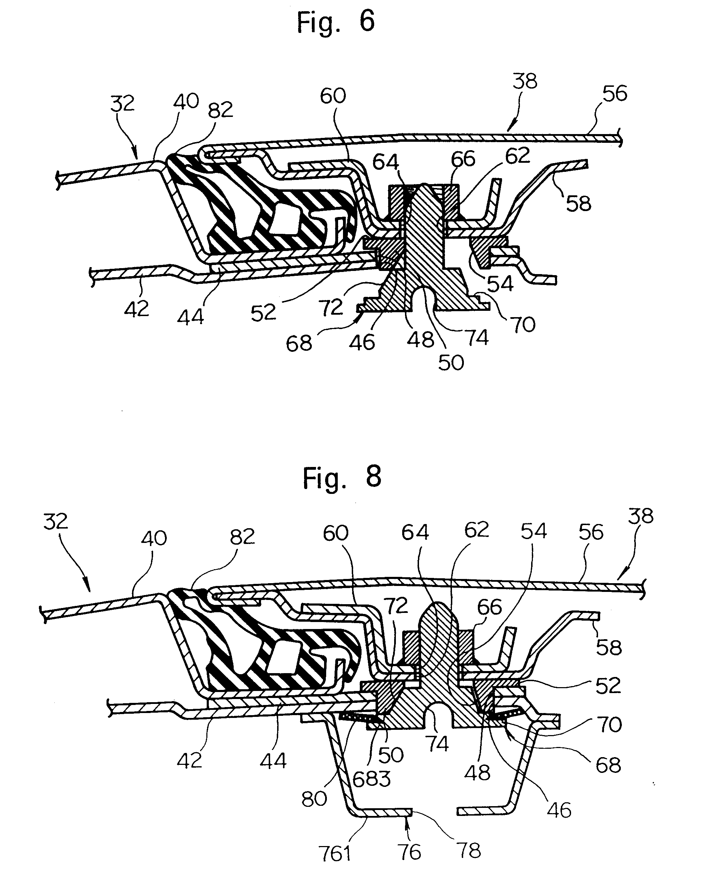

Figures 1 to 4 of the accompanying drawings illustrate an automobile roof structure which constitutes an in-house state of the art. Figures 5 and 6 illustrate a construction claimed in our copending European Patent Specification EP-A-0 244 072 filed on March 17th, 1987 under the same priority date of April 30th, 1986 as in the present european Patent Specification.

The present invention was developed in view of the foregoing background and to overcome the foregoing drawbacks. It is accordingly an object of the present invention to provide an automobile roof structure which includes a detachable roof section, a fastening means and a holding means.

Another object of the present invention is to prevent the fastening means from dropping down from a fixed roof section and to securely fasten the detachable roof section to a fixed roof section of a vehicle.

The automobile roof structure of the present invention includes a detachable roof section, a fixed roof section, fastening means for fastening respective opposite edges of the detachable roof section to adjacent fixed roof sections and a holding means.

The fixed roof section includes a bracket extending from the fixed roof section.

The detachable roof section is selectively mounted on the bracket of the fixed roof section. The detachable roof section includes an aperture.

One fastening means includes a first engaging member and a second engaging member.

The first engaging member is secured to the detachable roof section and is located in the vicinity of the aperture of the detachable roof section.

The second engaging member is selectively inserted into the aperture of the detachable roof section. The second engaging member includes an engaging portion, and selectively engages with the first engaging member.

The holding means includes a first end and a second end. The first end of the holding means is secured to the fixed roof section. The second end of the holding means is secured to the second engaging member.

Accordingly, even when the engaging portion of the second engaging member does not engage with the first engaging member, the second engaging member does not drop down from the fixed roof section.

The above objects, features and advantages of the present invention will become more apparent from the description of the invention which follows, taken in conjunction with the accompanying drawings, wherein like reference numerals denote like elements:

FIG. 1 is a perspective view of a vehicle including a first fastening means;

FIG. 2 is a cross-sectional view of the first fastening means taken along the line II-II in FIG. 1, wherein a detachable roof section is positioned properly, and the detachable roof section is secured to a front roof section by a first bolt of the first fastening means;

FIG. 3 is a cross-sectional view of the first fastening means taken along the line III-III in FIG. 1, wherein the detachable roof section is positioned properly;

FIG. 4 is a cross-sectional view of the first fastening means taken along the line III-III in FIG. 1, wherein the detachable roof section is not positioned properly;

FIG. 5 is a cross-sectional view of second fastening means, wherein the detachable roof section is positioned properly, and the detachable roof section is secured to the front roof section by a second bolt of the second fastening means;

FIG. 6 is a cross-sectional view of the second fastening means, wherein the detachable section is positioned properly;

FIG. 7 is a perspective view of a vehicle including fastening means according to the present invention;

FIG. 8 is a cross-sectional view of the fastening means taken along the line VIII-VIII in FIG. 7 and constituting a first embodiment of the present invention, wherein the detachable roof section is positioned properly, and the detachable roof section is secured to the front roof section by a bolt of the fastening means;

FIG. 9 is a cross-sectional view of a second embodiment of a fastening means according to the invention taken along the line VIII-VIII in FIG. 7, wherein a bolt thereof is biased toward a bottom flange of an under cover;

FIG. 10 is a cross-sectional view of a third embodiment of fastening means according to the invention taken along the line VIII-VIII in FIG. 7, wherein the detachable roof section is positioned properly, and the detachable roof section is secured to the front roof section by a bolt thereof; and

FIG. 11 is a perspective view of a holding means of the third embodiment.

The present invention will be described in detail with reference to the accompanying drawings of which Figures 8 - 11 illustrate preferred different embodiments according to the present invention.

Referring to Figure 1, a vehicle includes a windshield 28, a front pillar 30, a front roof section 32, a detachable roof section 38, a rear roof section 36, a center pillar 35 and a rear window 34. The front pillar 30 is connected and secured to the front roof section 32. The front pillar 30 and the front roof section 32 surround the windshield 28 (i.e., the front pillar 30 and the front roof section 32 constitute a windshield frame). The rear roof section 36 is connected to the center pillar 35. The rear roof section 36 and the center pillar 35 constitute a roll bar.

The detachable roof section 38 is positioned between the front roof section 32 and the rear roof section 36, and the detachable roof section 38 covers a passenger compartment. The detachable roof section 38 includes front and rear portions.

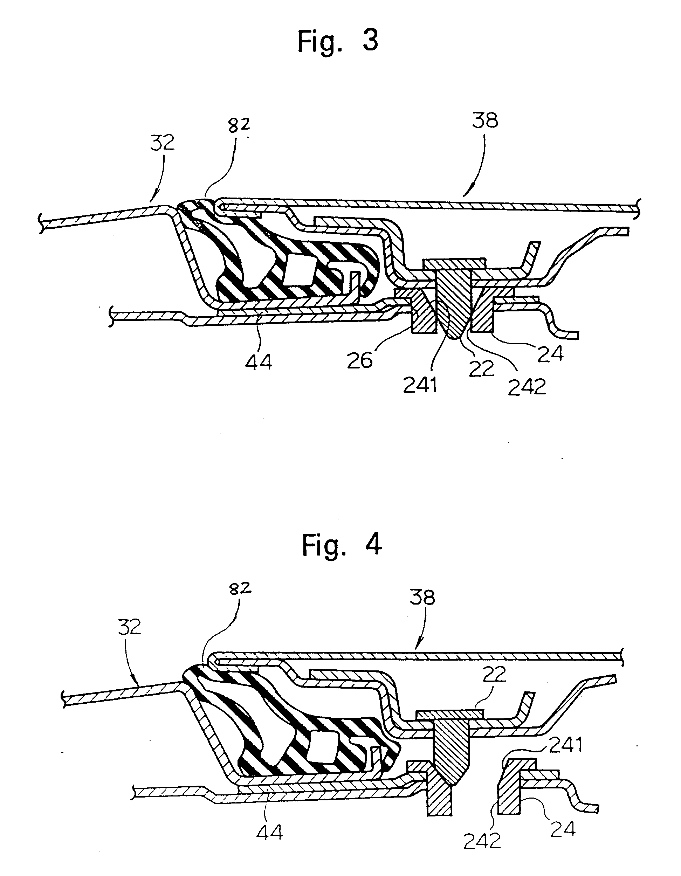

As shown in Figures 2 and 3, the front portion of the detachable roof section 38 is selectively mounted on the front roof section 32, and the detachable roof section 38 is selectively secured to the front roof section 32. The front portion of the detachable roof section 38 includes a plurality of first holes 18 and a plurality of projections 22. The first hole 18 is located apart from the projection 22 in the lateral direction of the vehicle. A nut 14 is secured to the front portion of the detachable roof section 38. A center line of the nut 14 corresponds to a center line of the first hole 18 of the detachable roof section 38.

The front roof section 32 includes a plurality of brackets 44 which project rearwardly in the longitudinal direction of the vehicle. Each bracket 44 includes second and third holes 20 and 26 therewithin. The second hole 20 of each bracket 44 corresponds to the first hole 18 of the detachable roof section 38. In a normal condition, the third hole 26 of the bracket 44 corresponds to the projection 22 of the detachable roof section 38. A guiding member 24 is inserted into the third hole 26. The guiding member 24 includes a guiding surface 241 and a positioning hole 242.

The first holes 18, the nuts 14 and the projections 22 of the detachable roof section 38, the second holes 20 and the guiding members 24 of the front roof section 32 and the bolts 12 constitute a first fastening means.

In a normal securing condition, as shown in Figures 2 and 3, a bolt 12 is inserted into the second and first holes 20 and 18, and the bolt 12 engages with the nut 14. Simultaneously, the projection 22 is positioned within the positioning hole 242. Accordingly, the detachable roof section 38 and the front roof section 32 form a substantially flush surface, and a space defined between the detachable roof section 38 and the front roof section 32, is effectively sealed by a weather strip 82.

However, when due to manufacturing error, the projection 22 of the detachable roof section 38 is not aligned with the positioning hole 242 of the guiding member 24, the projection 22 of the detachable roof section 38 is located on the guiding surface 241 of the guiding member 24. Accordingly, the detachable roof section 38 projects from the front roof section 32, and sealing effect between the detachable roof section 38 and the front roof section 32 is deteriorated.

Thus, in order to prevent the detachable roof section 38 from projecting from the front roof section 32, a first distance, defined between the projection 22 and the first hole 18 of the detachable roof section 38, must be the same as a second distance defined between the second hole 20 of the front roof section 32 and the positioning hole 242 of the guiding member 24.

However, when due to manufacturing error, the first distance is not the same as the second distance, the detachable roof section 38 might not be secured to the front roof section 32 or the sealing effect between the detachable roof section 38 and the front roof section 32 might be deteriorated.

Figures 5 and 6 show a second fastening means, provided between the detachable roof section 38 and the front roof section 32.

As shown in Figure 6, the second fastening means includes guiding means 50 and a second bolt 68. The guiding means 50 is inserted into a fourth hole 46 defined within a pillar inner panel 42 and a fifth hole 48 defined within a bracket 44. The guiding means 50 includes a flange 52 secured to the bracket 44 by welding. The guiding means 50 includes a tapered hole 54 (i.e., the inner diameter of the lower edge of tapered hole 54 is larger than the inner diameter of the upper edge of tapered hole 54) and the tapered hole 54 includes a smooth surface thereon. A front portion of the bracket 44 is sandwiched between and secured to the pillar inner panel 42 and a roof header outer panel 40. The pillar inner panel 42 is connected to the front pillar 30. The roof header outer panel 40 constitutes a rear portion of the front roof section 32. A weather strip 82 is mounted on a rear portion of the roof header outer panel 40. The bracket 44 extends rearwardly in the longitudinal direction of the vehicle. The bracket 44 is located vertically below an outer surface of the front roof section 32.

The detachable roof section 38 includes a roof outer panel 56 and a roof inner panel 58.

A front edge of the roof outer panel 56 is secured to a front edge of the roof inner panel 58. The weather strip 82 is sandwiched between the roof header outer panel 40 and the front edge of the roof outer panel 56, as a result, a space, defined between the roof header outer panel 40 and the front edge of the roof outer panel 56, is effectively sealed.

A portion of the roof inner panel 58 projects downwardly and includes a sixth hole 62. A reinforcement 60 is secured to the projecting portion of the roof inner panel 58, and includes a seventh hole 64 corresponding to the sixth hole 62 of the roof inner panel 58. A nut 66 is welded on the reinforcement 60, and the nut 66 includes a threaded hole. The nut 66 has the function of a first engaging member. The center line of the threaded hole of the nut 66 is the substantially aligned with the center line of the sixth hole 62 of the roof inner panel 58.

The second bolt 68 of the second fastening means includes a threaded portion 681 and a head portion 68. The head portion 68 includes a smooth tapered surface 72, a flange 70 and an adjusting recess 74. The second bolt 68 functions as a second engaging member. The tapered surface 72 includes a small diameter edge and a large diameter edge. The outer diameter of the small diameter edge of the tapered surface 72 of the second bolt 68 is smaller than the inner diameter of the upper edge of the tapered hole 54 of the guiding means 50. The outer diameter of the large diameter edge of the tapered surface 72 of the second bolt 68 is greater than the inner diameter of the upper edge of the tapered hole 54 of the guiding means 50. The outer diameter of the large diameter edge of the tapered surface 72 of the second bolt 68 is smaller than the inner diameter of the lower edge of the tapered hole 54 of the guiding means 50. The small diameter edge of the tapered surface 72 is located in the vicinity of the threaded portion 681 of the second bolt 68. The large diameter edge of the tapered surface 72 is located apart from the threaded portion 681. The flange 70 extends outwardly and is located in the vicinity of the large diameter portion.

When the threaded portion 681 of the second bolt 68 engages with and is threaded into the threaded hole of the nut 66, the guiding means 50 is clamped between the flange 70 of the second bolt 68 and the projection portion of the roof inner panel 58. In this condition, a portion of the tapered surface 72 of the second bolt 68 is not in contact with a portion of the tapered hole 54 of the guiding means 50. An adjusting recess 74 is defined within the head portion 68, and when the second bolt 68 is to be threaded into or out of the nut 66, a coin or a screwdriver is inserted into the adjusting recess 74.

The process of fastening the detachable roof section 38 to the front roof section 32 is disclosed hereinafter.

First, the detachable roof section 38 is mounted on the front and rear roof sections 32 and 36 of the vehicle.

When the detachable roof section 38 is not positioned properly, the center line of the guiding means 50 is located apart from the center line of the second bolt 68.

However, when the second bolt 68 is threaded into the nut 66, the tapered surface 72 of the second bolt 68 contacts the tapered hole 54 of the guiding means 50.

As a result, the second bolt 68 forces the detachable roof section 38 to move toward the proper position.

Therefore, the detachable roof section 38 is positioned properly and the space defined between the front edge of the detachable roof section 38 and the front roof section 32, is securely sealed.

However, the second bolt 68 is separatable from the front roof section 32 so that when the detachable roof section 38 is removed from the front roof section 32 and the rear roof section 36, it is troublesome to retain the second bolt 68 in a suitable position.

Figures 7 through 9 show fastening means according to the invention, provided between the detachable roof section 38 and the front roof section 32, according to the present invention.

As shown in Figure 8, the fastening means includes the guiding means 50, a bolt 68, an under cover 76 and holding means 80. The guiding means 50 is inserted into a fourth hole 46 defined within a pillar inner panel 42 and a fifth hole 48 defined within a bracket 44. The guiding means 50 includes a flange 52 secured to the bracket 44 by welding. The guiding means 50 includes a smooth tapered hole 54 (i.e., the inner diameter of the lower edge of the tapered hole 54 is larger than the inner diameter of the upper edge of the tapered hole 54). A front portion of the bracket 44 is sandwiched between and secured to the pillar inner panel 42 and a roof header outer panel 40. The pillar inner panel 42 is connected to the front pillar 30. The roof header outer panel 40 constitutes a rear portion of the front roof section 32. A weather strip 82 is mounted on a rear portion of the roof header outer panel 40. The bracket 44 extends rearwardly in the longitudinal direction of the vehicle. The bracket 44 is located vertically below an outer surface of the front roof section 32.

The detachable roof section 38 includes a roof outer panel 56 and a roof inner panel 58.

A front edge of the roof outer panel 56 is secured to a front edge of the roof inner panel 58. The weather strip 82 is sandwiched between the roof header outer panel 40 and the front edge of the roof outer panel 56, as a result, a space defined between the roof header outer panel 40 and the front edge of the roof outer panel 56, is effectively sealed.

A portion of the roof inner panel 58 projects downwardly and includes a sixth hole 62. A reinforcement 60 is secured to the projecting portion of the roof inner panel 58, and includes a seventh hole 64 corresponding to the sixth hole 62 of the roof inner panel 58. A nut 66 is welded on the reinforcement 60, and the nut 66 includes a threaded hole. The nut 66 functions as a first engaging member. The center line of the threaded hole of the nut 66 is substantially aligned with the center line of the sixth hole 62 of the roof inner panel 58.

The bolt 68 of the fastening means includes a threaded portion 681 and a head portion 68. Further, the head portion 68 includes a tapered surface 72, a flange 70 and an adjusting recess 74. The bolt 68 functions as a second engaging member. The tapered surface 72 includes a small diameter edge and a large diameter edge. The tapered surface 72 is a smooth surface. The outer diameter of the small diameter edge of the tapered surface 72 of the bolt 68 is smaller than the outer diameter of the upper edge of the tapered hole 54 of the guiding means 50. The outer diameter of the large diameter edge of the tapered surface 72 of the bolt 68 is greater than the inner diameter of the upper edge of the tapered hole 54 of the guiding means 50. The outer diameter of the large diameter edge of the tapered surface 72 of the bolt 68 is smaller than the inner diameter of the lower edge of the tapered hole 54 of the guiding means 50. The outer diameter of the small diameter edge of the tapered surface 72 is located in the vicinity of the threaded portion 681 of the second bolt 68. The outer diameter of the large diameter edge of the tapered surface 72 is located apart from the threaded portion 681. A flange 70 is located in the vicinity of the large diameter portion and the flange 70 extends outwardly.

The under cover 76 is secured to a lower surface of the pillar inner panel 42. The under cover 76 includes a bottom flange 761 and an aperture 78 defined within the bottom flange 761. A center line of the aperture 78 corresponds to the center line of the tapered hole 54 of the guiding means 50. The aperture 78 has a smaller diameter than the inner diameter of the upper edge of the tapered hole 54 of the guiding means 50.

Accordingly, even when the bolt 68 is not engaged with the nut 66, the bolt 68 can not drop out from the under cover 76.

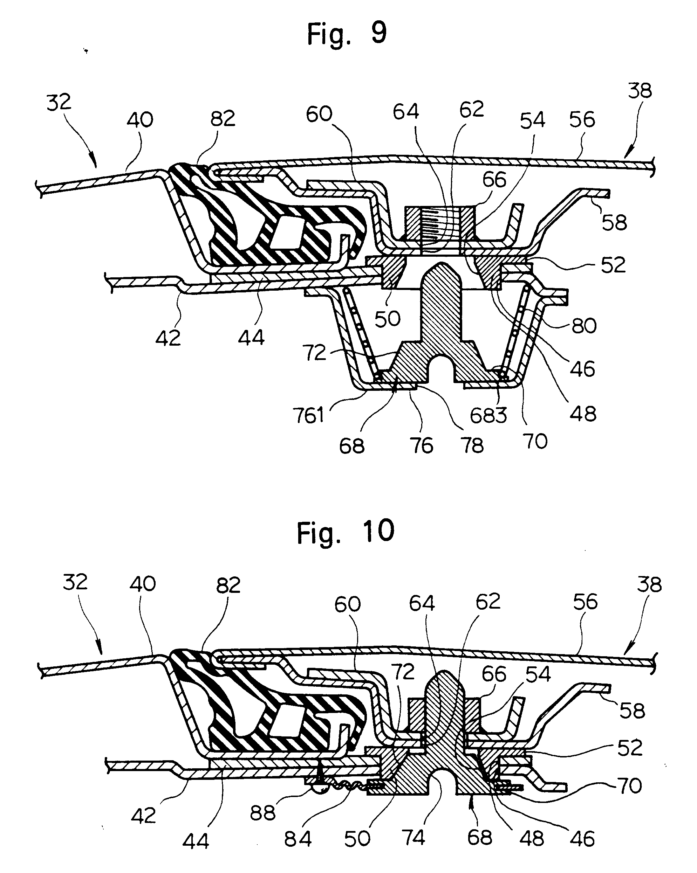

Further, the holding means 80 is preferably a conical spring. One end of the conical spring 80 is fixed to the lower surface of the pillar inner panel 42 and the other end of the conical spring 80 is inserted into and secured to a V-shape groove 683 defined within the flange 70 of the bolt 68. As shown in Figure 9, the conical spring 80 biases the bolt 68 toward the bottom flanges 761 of the under cover 76. Furthermore, the entire flange 70 of the bolt 68 is biased uniformly downwardly by the conical spring 80.

Accordingly, even when the bolt 68 is not engaged with the nut 66, the bolt 68 does not move in the under cover 76. As a result, the bolt 68 does not make any noise in the under cover 76.

Further, the conical spring 80 maintains the position of the bolt 68 within the under cover 76. Thus, the bolt 68 remains aligned with the nut 66, so that it is very easy for an operator to initiate engagement of the bolt 68 with the nut 66 of the detachable roof section 38.

Moreover, the bolt 68 is covered by the under cover 76, so that the appearance is improved.

Furthermore, when the threaded portion 681 of the bolt 68 engages with and is threaded into the threaded hole of the nut 66 against the biasing force of the conical spring 80, the guiding means 50 is clamped between the flange 70 of the bolt 68 and the projecting portion of the roof inner panel 58. In this condition, a portion of the tapered surface 72 of the bolt 68 is not in contact with a portion of the tapered hole 54 of the guiding means 50. The adjusting recess 74 is defined within the head portion 68, and when the bolt 68 is screwed, a coin or a screw driver is inserted into the adjusting recess 74.

The process of fastening the detachable roof section 38 to the front roof section 32 is disclosed hereinafter.

First, the detachable roof section 38 is mounted on the front and rear roof sections 32 and 36 of the vehicle. If the detachable roof section 38 is not properly located, the center line of the guiding means 50 is not aligned with the center line of the bolt 68. However, when the bolt 68 is threaded into the nut 66 against the biasing force of the conical spring 80, the tapered surface 72 of the bolt 68 contacts with the tapered hole 54 of the guiding means 50. As a result, the bolt 68 forces the detachable roof section 38 to move toward the proper position. Therefore, the detachable roof section 38 is properly positioned and a space, defined between the front edge of the detachable roof section 38 and the front roof section 32, is securely sealed.

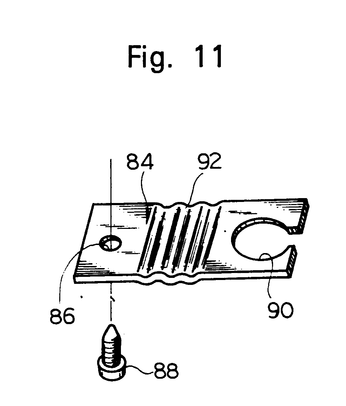

Figures 10 and 11 show another embodiment of a fastening means according to the present invention. This embodiment is substantially similar to the embodiments shown in Figures 8 and 9.

However, this embodiment uses a plate spring 84 as the holding means, instead of the conical spring 80.

As shown in Figure 11, the plate spring 84 includes an aperture 86, an engagement recess 90 and a corrugated portion 92.

As shown in Figure 10, the plate spring 84 is secured to the pillar inner panel 42 by a screw 88. The bolt 68 is inserted into and engaged with an engagement recess 90 of the plate spring 84. The corrugated portion 92 of the plate spring 84 allows the bolt 68 to move in the vertical and longitudinal direction of the vehicle.

As described herein, the present invention overcomes the shortcomings of the known art by providing an automobile roof structure which includes a detachable roof section, a fixed roof section, fastening means including a first engaging member and a second engaging member and holding means.

While the present invention has been described in its preferred embodiments, it is to be understood that the invention is not limited thereto, and may be otherwise embodied within the scope of the following claims.

## Claims

1. An automobile roof structure comprising:
   a fixed roof section (32);
   a bracket (44) extending from said fixed roof section (32);
   a detachable roof section (38) selectively mounted on the bracket (44), said detachable roof section having an aperture (64);
   fastening means for fastening an edge of said detachable roof section (38) to said bracket (44) and comprising a first engaging member (66) and a second engaging member (68), the first engaging member (66) located adjacent the aperture (64) of said detachable roof section, the second engaging member (68) being selectively inserted into the aperture (64) of said detachable roof section, said second engaging member having an engaging portion (681), the engaging portion of the second engaging member selectively engaging the first engaging member (66);
   further fastening means for fastening an opposite edge of said detachable roof section (38) to a further fixed roof section (36), and
   holding means (80, 84) having a first end and a second end, said first end being secured with respect to said fixed roof section (32) and said second end being secured with respect to said second engaging member (68);
   whereby said holding means (80, 84) retains said second engaging member (68) on said fixed roof section (32) when said second engaging member (68) is not engaged with said first engaging member (66).

2. The automobile roof structure as claimed in Claim 1, wherein the second engaging member (68) includes a securing groove (683) and the second end of the holding means (80) is inserted into the securing groove (683) of the second engaging member (68).

3. The automobile roof structure as claimed in Claim 1, wherein the holding means (80) biases the second engaging member (68) away from the fixed roof section (32).

4. The automobile roof structure as claimed in Claim 3, further comprising an under cover (76) secured to the fixed roof section (32), the under cover (76) is located under the bracket (44).

5. The automobile roof structure as claimed in claim 4, wherein the under cover (76) includes a bottom flange (761), whereby the second engaging member (68) is biased toward the bottom flange (761) by the holding means (80).

6. The automobile roof structure as claimed in claim 5, wherein the under cover (76) includes a bottom aperture (78), the bottom aperture (78) having an inner diameter which is less than an outer diameter of the second engaging member (68), whereby the second engaging member (68) can not drop out from the under cover (76).

7. The automobile roof structure as claimed in claim 6, wherein the second engaging member (68) further includes a bottom surface and an adjusting recess (74) defined within the bottom surface.

8. The automobile roof structure as claimed in claim 7, wherein the adjusting recess (74) has an inner diameter which is less than the inner diameter of the bottom aperture (78) of the under cover (76).

## Revendications

1. Structure de toit d'automobile comprenant:

une section de toit fixe (32);

un support (44) s'étendant depuis ladite section de toit fixe (32);

une section de toit détachable (38) montée de façon sélective sur le support (44), ladite section de toit détachable présentant une ouverture (64);

un moyen de fixation pour fixer un bord de ladite section de toit détachable (38) audit support (44), et comprenant un premier organe de montage (66) et un second organe de montage (68), le premier organe de montage (66) étant situé adjacent à l'ouverture (64) de ladite section de toit détachable, le second organe de montage (68) étant inséré de façon sélective dans l'ouverture (64) de ladite section de toit détachable, ledit second organe de montage présentant une partie de montage (681), coopérant de façon sélective avec le premier organe de montage (66);

un autre moyen de fixation pour fixer le bord opposé de ladite section de toit détachable (38) à une autre section de toit fixe (36), et

des moyens de maintien (80, 84), présentant une première et une seconde extrémités, ladite première extrémité étant fixée à ladite section de toit fixe (32), et ladite seconde extrémité étant fixée audit second organe de montage (68);

de manière que lesdits moyens de maintien (80, 84) maintiennent ledit second organe de montage (68) sur ladite section de toit fixe (32), lorsque ledit second organe de montage (68) n'est pas en contact avec ledit premier organe de montage (66).

2. Structure de toit d'automobile selon la revendication 1, dans laquelle le second organe de montage (68) comprend une rainure de retenue (683), et la seconde extrémité du moyen de maintien (80) est insérée dans la rainure de retenue (683) du second organe de montage (68).

3. Structure de toit d'automobile selon la revendication 1, dans lequel le moyen de maintien (80) pousse le second organe de montage (68) à l'écart de la section de toit fixe (32).

4. Structure de toit d'automobile selon la revendication 3, comprenant en outre un couvercle inférieur (76) fixé sur la section de toit fixe (32), le couvercle inférieur (76) étant situé sous le support (44).

5. Structure de toit d'automobile selon la revendication 4, dans laquelle le couvercle inférieur (76) comprend un rebord inférieur (761), le second organe de montage (68) étant incliné vers le rebord inférieur (761) grâce au moyen de maintien (80).

6. Structure de toit d'automobile selon la revendication 5, dans laquelle le couvercle inférieur (76) comprend une ouverture inférieure (78), cette dernière ayant un diamètre intérieur inférieur au diamètre extérieur du second organe de montage (68), de manière que ce dernier ne puisse s'échapper du couvercle inférieur (76).

7. Structure de toit d'automobile selon la revendication 6, dans laquelle le second organe de montage (68) comprend en outre une surface inférieure et un évidement d'ajustement (74) défini dans la surface inférieure.

8. Structure de toit d'automobile selon la revendication 7, dans laquelle le diamètre intérieur de l'évidement d'ajustement (74) est inférieur au diamètre intérieur de l'ouverture inférieure (78) du couvercle inférieur (76).

**Patentansprüche**

1. Kraftfahrzeugdachkonstruktion, **gekennzeichnet durch** ein festes Dachteil (32),
einen von dem festen Dachteil vorstehenden Befestigungsarm (44),
ein wahlweise an dem Befestigungsarm (44) angebrachtes abnehmbares Dachteil (38), wobei das abnehmbare Dachteil eine Öffnung (64) aufweist,
Befestigungsmittel zum Befestigen einer Kante des abnehmbaren Dachteils (38) an dem Befestigungsarm (44), welche einen ersten Eingriffskörper (66) und einen zweiten Eingriffskörper (68) umfassen, wobei der erste Eingriffskörper (66) zu der Öffnung (64) des abnehmbaren Dachteils angrenzend liegt, der zweite Eingriffskörper (68) wahlweise in der Öffnung (64) des abnehmbaren Dachteils eingesetzt ist, der zweite Eingriffskörper einen Eingriffsteil (681) aufweist, der Eingriffsteil des zweiten Eingriffkörpers wahlweise mit dem ersten Eingriffskörper (66) in Eingriff steht,
weitere Befestigungsmittel zum Befestigen einer gegenüberstehenden Kante des abnehmbaren Dachteils (38) an einem weiteren festen Dachteil (36), und
Haltemittel (80,84), welche ein erstes Ende und ein zweites Ende aufweisen, wobei das erste Ende bezüglich des festen Dachteils (32) befestigt ist und das zweite Ende bezüglich des zweiten Eingriffkörpers (68) befestigt ist, wodurch die Haltemittel (80,84) den zweiten Eingriffskörper (68) an dem festen Dachteil (32) zurückhalten, wenn der zweite Eingriffskörper (68) nicht mit dem ersten Eingriffskörper (66) in Eingriff steht.

2. Kraftfahrzeugdachkonstruktion nach Anspruch 1, dadurch gekennzeichnet, daß der zweite Eingriffskörper (68) eine Sicherungsaussparung (683) aufweist und das zweite Ende der Haltemittel (80) in die Sicherungsaussparung (683) des zweiten Eingriffkörpers (68) eingesetzt ist.

3. Kraftfahrzeugdachkonstruktion nach Anspruch 1, dadurch gekennzeichnet, daß die Haltemittel (80) den zweiten Eingriffskörper (68) von dem festen Dachteil (32) weg vorspannen.

4. Kraftfahrzeugdachkonstruktion nach Anspruch 3, gekennzeichnet durch eine an dem festen Dachteil (32) festgehaltene Unterabdeckung (76), wobei die Unterabdeckung (76) unter dem Befestigungsarm (44) liegt.

5. Kraftfahrzeugdachkonstruktion nach Anspruch 4, dadurch gekennzeichnet, daß die Unterabdeckung (76) einen Unterflansch (761) umfaßt, wobei der zweite Eingriffskörper (68) durch die Haltemittel (80) zu dem Unterflansch (761) hin vorgespannt ist.

6. Kraftfahrzeugdachkonstruktion nach Anspruch 5, dadurch gekennzeichnet, daß die Unterabdeckung (76) eine Bodenöffnung (78) umfaßt, wobei die Bodenöffnung (78) einen inneren Durchmesser aufweist, welcher kleiner als der äußere Durchmesser des zweiten Eingriffkörpers (68) ist, wodurch der zweite Eingriffskörper (68) nicht aus der Unterabdeckung (76) herausfallen kann.

7. Kraftfahrzeugdachkonstruktion nach Anspruch 6, dadurch gekennzeichnet, daß der zweite Eingriffskörper (68) weiterhin eine Bodenfläche und eine in der Bodenfläche ausgebildete Einstellaussparung (74) umfaßt.

8. Kraftfahrzeugdachkonstruktion nach Anspruch 7, dadurch gekennzeichnet, daß die Einstellaussparung (74) einen inneren Durchmesser aufweist, welcher kleiner als der innere Durchmesser der Bodenöffnung (78) der Unterabdeckung daß (76) ist.

## Fig. 1

## Fig. 2

# Fig. 3

# Fig. 4

## Fig. 7

## Fig. 5

EP 0 244 073 B1

## Fig. 6

## Fig. 8

## Fig. 9

## Fig. 10

# Fig. 11